# EUROPEAN PATENT APPLICATION

(11) **EP 4 614 633 A1**
(43) Date of publication of application: **10.09.2025**
(21) Application number: 23886093.6
(22) Date of filing: 19.10.2023
(51) Int. Cl.: H01M 8/1018, H01M 8/1072, H01M 8/083, H01M 8/10

(54) **POLY(ARYL PEPERIDINIUM) COPOLYMER IONOMER GRAFTED WITH PROPARGYL GROUP, CROSS-LINKED ANION EXCHANGE MEMBRANE, AND METHOD FOR PREPARING SAME**

(30) Priority: 01.11.2022 KR 20220143826
(71) Applicant: IUCF-HYU (Industry-University Cooperation Foundation Hanyang University), Seoul 04763 (KR)
(72) Inventor: LEE, Young Moo, Seoul 06602 (KR); HU, Chuan, Seoul 04763 (KR); LEE, Yeongjun, Seoul 04763 (KR); JUNG, Seung Won, Seoul 04763 (KR)
(74) Representative: dompatent von Kreisler Selting Werner - Partnerschaft von Patent- und Rechtsanwälten mbB
(86) International application number: PCT/KR2023/016302
(87) International publication number: WO 2024/096396

(57) **Abstract**

The present disclosure relates to a poly(aryl piperidinium) copolymer ionomer which is grafted with a propargyl group, contains a piperidinium group, and does not have any aryl ether bond in the polymer backbone; an anion-exchange membrane cross-linked therefrom, and a method for preparing the same. The poly(aryl piperidinium) copolymer ionomer grafted with the propargyl group has excellent chemical and thermal stability, ionic conductivity, mechanical properties, dimensional stability, and durability. In addition, the cross-linked anion-exchange membrane prepared therefrom is greatly improved in the peel strength of the catalyst layer, thus promoting the interaction between the ionomer and the membrane and stabilizing the catalyst layer to remarkably improve the durability of a fuel cell.

## Description

### [Technical Field]

The present disclosure relates to a poly(aryl piperidinium) copolymer ionomer grafted with a propargyl group, a cross-linked anion-exchange membrane, and a method for preparing the same. More specifically, the present disclosure relates to a technology for synthesizing a poly(aryl piperidinium) copolymer ionomer having a propargyl group grafted thereon and a piperidinium group introduced therein without any aryl ether bond in the polymer backbone, and preparing a cross-linked anion-exchange membrane therefrom for application to alkaline fuel cells, water electrolysis devices, etc.

### [Background Art]

Anion-exchange membrane fuel cells (AEMFCs) and anion-exchange membrane water electrolyzers (AEMWEs) are promising energy conversion devices that can replace expensive proton exchange membrane fuel cells (PEMFCs). Anion-exchange membrane fuel cell or water electrolysis technologies have made remarkable progress over the past several years due to the development of non-platinum catalyst-based anion-exchange membranes and ionomers with high activity, durability, and conductivity.

The advanced anion-exchange membranes achieved an anion conductivity of 150 mS cm⁻¹ or higher at 80 °C while exhibiting remarkable chemical stability (< 10% degradation) in harsh alkaline environments (80 °C, 1 M NaOH or KOH solution, over 1,000 hours). Recently, AEMFCs have achieved remarkable peak power densities of 2 W cm⁻² or higher, similarly to those of commercial PEMFCs. However, most of AEMFCs still have durability problems during long-term operation. An AEMFC that can operate stably for more than 500 hours at 80 °C with a current density of 0.6 A cm⁻² or lower has never been reported.

The reason for the poor durability of the AEMFCs is the unstable contact between the catalyst layer and the membrane. The interfacial stability between the catalyst layer and the membrane where electrochemical reaction occurs is one of the factors that determine the performance and lifespan of AEMFCs and AEMWEs. In particular, rapid moisture adsorption and desorption at the catalyst layer under high current density conditions deteriorates the interfacial stability between the catalyst layer and the membrane, resulting in aggregation and desorption of catalyst particles from the catalyst layer. In addition, excessive expansion of the ionomer interferes with the movement of hydrogen gas, which is a fuel. An ideal catalyst layer should be porous and have a stable three-phase interface structure, wherein the catalyst is distributed uniformly, and the membrane and the ionomer should have durable chemical structures. This is to reduce the interfacial resistance between the catalyst layer and the anion-exchange membrane and to provide good adhesive ability of the ionomer that can improve the stability of the catalyst layer. Therefore, the development of technologies for stabilizing the catalyst layer is very important for achieving durable AEMFCs and AEMWEs.

Meanwhile, a cross-linked poly(aryl piperidinium) anion-exchange membrane with a propargyl group grafted and a piperidinium group introduced without any aryl ether bond in the polymer backbone has not been synthesized yet, and a technology for applying it to alkaline fuel cells or water electrolysis is not known specifically.

Therefore, the inventors of the present disclosure have conducted consistent researches to expand the application fields of aromatic polymer ion-exchange membranes with excellent thermal and chemical stability and mechanical properties. We have attempted to dramatically improve the durability of AEMFCs by stabilizing the catalyst layer by promoting the interfacial interaction between the catalyst layer and the AEM as well as the catalyst layer itself in order to improve durability, which is the weakness of conventional AEMFCs.

That is, the present disclosure was completed by synthesizing a poly(aryl piperidinium) copolymer ionomer in which a propargyl group is grafted and a piperidinium group is introduced without any aryl ether bond in the polymer backbone, and by preparing an anion-exchange membrane having a cross-linked structure therefrom. It was discovered that the anion-exchange membrane can be applied to alkaline fuel cells, water electrolysis devices, supercapacitors, carbon dioxide reduction, redox flow batteries, etc.

### [References of Related Art]

### [Patent documents]

Patent Document 1: Korean Patent Publication No. 10-2021-0071810.
Patent Document 2: International Patent Publication No. WO 2019/068051.
Patent Document 3: Chinese Patent Publication No. CN 109384908.
Patent Document 4: United States Patent Publication No. US 2019/0036143.

### [Disclosure]

### [Technical Problem]

The present disclosure is directed to providing a poly(aryl piperidinium) copolymer ionomer grafted with a propargyl group, which has high chemical and thermal stability, ionic conductivity, mechanical properties, dimensional stability and durability, and a method for preparing the same.

The present disclosure is also directed to providing an anion-exchange membrane having a cross-linked structure, prepared from the novel propargyl group-grafted poly(aryl piperidinium) copolymer ionomer, which has greatly improved dimensional stability of the membrane and a stabilized catalyst layer due to promoted interaction between the catalyst layer and the anion-exchange membrane, and is therefore applicable to alkaline fuel cells, water electrolysis devices, supercapacitors, carbon dioxide reduction, redox flow batteries, etc. with dramatically improved durability.

### [Technical Solution]

The present disclosure provides a poly(aryl piperidinium) copolymer ionomer grafted with a propargyl group, which has a repeating unit represented by <Chemical Formula 1>.

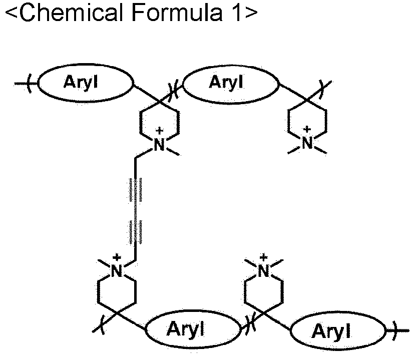

In Chemical Formula 1, Aryl is two or more different compounds selected from the compounds represented by the following structural formulas. 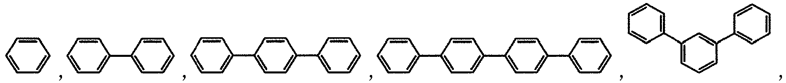 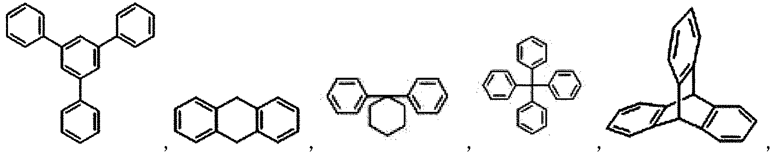 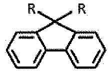 (R=H or CH₃) , 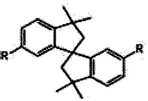 (R=H, OH or a C1-5 alkoxy), 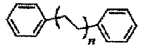 (n is an integer from 1 to 10)

In addition, the present disclosure provides a method for preparing a poly(aryl piperidinium) copolymer ionomer grafted with a propargyl group, which includes: (I) a step dissolving (a) two or more different compounds represented by the following structural formulas as monomers, and (b) 1-methyl-4-piperidone in an organic solvent to form a solution; (II) a step of slowly adding a strong acid catalyst to the solution, and stirring and reacting the mixture to obtain a viscous solution; (III) a step of precipitating, washing and drying the viscous solution to obtain a solid polymer; (IV) a step of adding potassium carbonate, propargyl bromide, and an excess amount of halomethane to a polymer solution in which the solid polymer is dissolved in an organic solvent and conducting reaction to form a quaternary piperidinium salt grafted with a propargyl group; and (V) a step of precipitating, washing and drying the mixed solution. 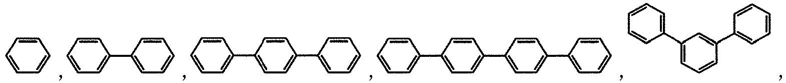 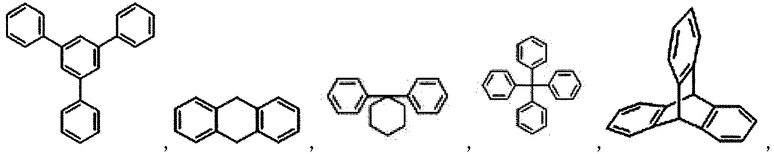 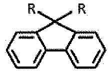 (R=H or CH₃) , 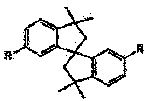 (R=H, OH or a C1-5 alkoxy), 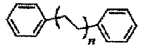 (n is an integer from 1 to 10)

In addition, the present disclosure provides an anion-exchange membrane cross-linked from the poly(aryl piperidinium) copolymer ionomer grafted with the propargyl group.

In addition, the present disclosure provides a method for preparing a cross-linked anion-exchange membrane, which includes: (i) a step of dissolving the poly(aryl piperidinium) copolymer ionomer grafted with the propargyl group in an organic solvent to form a polymer solution; (ii) a step of casting the polymer solution on a glass plate and heating the same to remove the organic solvent, thereby obtaining a dried membrane; (iii) a step of heat-treating the dried membrane to obtain a membrane in which a cross-linking reaction is induced; and (iv) a step of treating the obtained membrane with 1 M NaHCO₃ or 1 M NaOH, washing several times with ultrapure water, and drying the same.

In addition, the present disclosure provides an alkaline fuel cell including the cross-linked anion-exchange membrane.

In addition, the present disclosure provides a water electrolysis device including the cross-linked anion-exchange membrane.

In addition, the present disclosure provides a supercapacitor including the cross-linked anion-exchange membrane.

In addition, the present disclosure provides a carbon dioxide reduction device including the cross-linked anion-exchange membrane.

In addition, the present disclosure provides a redox flow battery including the cross-linked anion-exchange membrane.

### [Advantageous Effects]

A poly(aryl piperidinium) copolymer ionomer grafted with a propargyl group according to the present disclosure has excellent chemical and thermal stability, ionic conductivity, mechanical properties, dimensional stability, and durability.

In addition, a cross-linked anion-exchange membrane prepared from the novel propargyl group-grafted poly(aryl piperidinium) copolymer ionomer has a significantly improved peel strength of a catalyst layer and, therefore, the interaction between the ionomer and the membrane is promoted and the catalyst layer is stabilized, thereby dramatically improving the durability of a fuel cell.

### [Brief Description of Drawings]

FIG. 1 shows the ¹H NMR spectra of poly(aryl piperidinium) copolymer ionomers Trip-PFBP-Pr-m series and PDTP-Pr-m series (m is 10, 30 or 50) grafted with propargyl groups, obtained in Synthetic Examples 1 to 6 of the present disclosure.
FIGS. 2A to 2B show the (A) moisture content and (B) swelling ratio of cross-linked anion-exchange membranes x-Trip-PFBP-Pr-m series and x-PDTP-Pr-m series (m is 10, 30 or 50) after heat treatment at 170 °C for 0 minute, 120 minutes, and 240 minutes, respectively, in Preparation Examples 1 to 6 of the present disclosure.
FIGS. 3A to 3B show a result of analyzing the degree of crosslinking of an anion-exchange membrane x-PDTP-Pr-50 prepared in Preparation Example 3 of the present disclosure depending on heat treatment time [A: FT-IR spectra of the x-PDTP-Pr-50 anion-exchange membrane depending on heat treatment time, B: propargyl groups remaining in the x-PDTP-Pr-50 anion-exchange membrane depending on heat treatment time (calculated by integrating the peaks of propargyl groups in the FT-IR spectra)].
FIG. 4 shows the contact angles of cross-linked anion-exchange membranes x-Trip-PFBP-Pr-m series and x-PDTP-Pr-m series (m is 10, 30, 50), prepared in Preparation Examples 1 to 6 of the present disclosure, and PDTP and Trip-PFBP prepared in Comparative Examples 1 and 2, measured after heat treatment at 170 °C for 120 minutes.
FIG. 5 shows a thermogravimetric analysis (TGA) result for Trip-PFBP-Pr-m series and PDTP-Pr-m series prepared in Synthetic Examples 1 to 6 of the present disclosure (before heat treatment), and cross-linked anion-exchange membranes x-Trip-PFBP-Pr-m series and x-PDTP-Pr-m series prepared in Preparation Examples 1 to 6 after heat treatment at 170 °C for 120 minutes (m is 10, 30 or 50).
FIG. 6 shows the CO₃²⁻ conductivity (at 30 °C) of cross-linked anion-exchange membranes x-Trip-PFBP-Pr-m series and x-PDTP-Pr-m series (m is 10, 30 or 50), prepared in Preparation Examples 1 to 6 of the present disclosure, after heat treatment at 170 °C for 0 minutes, 120 minutes, and 240 minutes, respectively.
FIG. 7 shows the peel strength of catalyst-coated membranes depending on the type of copolymer ionomers and anion-exchange membranes.
FIGS. 8A to 8D show the electrochemical stability data of catalyst layers analyzed by a rotating disk electrode (RDE) test [transmission electron microscope images, average nanoparticle size, linear scan voltammograms (LSVs) for oxygen reduction reaction (ORR) of catalysts with different ionomers (A: Trip-PFBP, B: x-Trip-PFBP-10, C: x-Trip-PFBP-30, D: x-Trip-PFBP-50)].
FIGS. 9A to 9B show the fuel cell performance depending on the degree of crosslinking of copolymer ionomers and anion-exchange membranes.
FIG. 10 shows a result of measuring the in-situ durability of a fuel cell based on an anion-exchange membrane x-PDTP-Pr-10 using an asymmetric copolymer ionomer.
FIG. 11 shows water electrolysis performance (linear scan voltammograms, LSVs) and resistance (potentiostatic electrochemical impedance spectroscopy, PEIS) depending on the degree of crosslinking, temperature, and alkali composition of copolymer ionomers.
FIG. 12 shows the in-situ durability test result for an x-PDTP-Pr-10 anion-exchange membrane under the condition of 60 °C, 1 M KOH solution, and different current densities (0.5 A cm⁻², 1.0 A cm⁻², 1.5 A cm⁻²).

### [Best Mode]

Hereinafter, a poly(aryl piperidinium) copolymer ionomer grafted with a propargyl group, a cross-linked anion-exchange membrane, and a method for preparing the same according to the present disclosure will be described in detail.

The present disclosure provides a poly(aryl piperidinium) copolymer ionomer grafted with a propargyl group, which has a repeating unit represented by <Chemical Formula 1>.

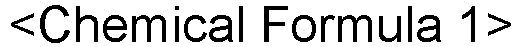

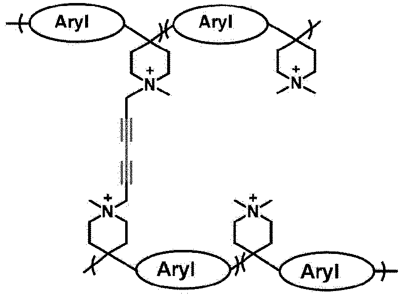

In Chemical Formula 1, Aryl is two or more different compounds selected from the compounds represented by the following structural formulas. 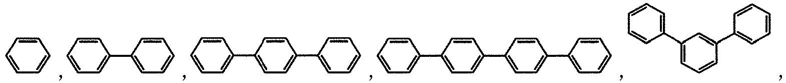 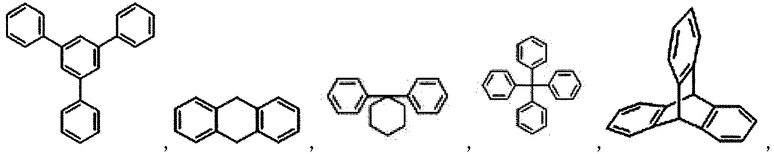 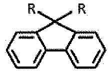 (R=H or CH₃) , 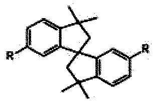 (R=H, OH or a C1-5 alkoxy), 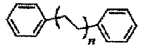 (n is an integer from 1 to 10)

As shown in Chemical Formula 1, the poly(aryl piperidinium) copolymer ionomer grafted with a propargyl group according to the present disclosure basically does not contain an aryl ether group in the polymer backbone, but has excellent film-forming ability and chemical and thermal stability due to the grafted propargyl group and the presence of the piperidinium group.

Additionally, ionic conductivity, mechanical properties, dimensional stability, and durability are improved greatly. In particular, when an anion-exchange membrane is formed, hydrophobicity is improved since a cross-linking structure is formed by the propargyl groups after heat treatment and, therefore, moisture content and expansion rate are reduced.

In addition, the present disclosure provides a method for preparing a poly(aryl piperidinium) copolymer ionomer grafted with a propargyl group, which includes: (I) a step dissolving (a) two or more different compounds represented by the following structural formulas as monomers, and (b) 1-methyl-4-piperidone in an organic solvent to form a solution; (II) a step of slowly adding a strong acid catalyst to the solution, and stirring and reacting the mixture to obtain a viscous solution; (III) a step of precipitating, washing and drying the viscous solution to obtain a solid polymer; (IV) a step of adding potassium carbonate, propargyl bromide, and an excess amount of halomethane to a polymer solution in which the solid polymer is dissolved in an organic solvent and conducting reaction to form a quaternary piperidinium salt grafted with a propargyl group; and (V) a step of precipitating, washing and drying the mixed solution. 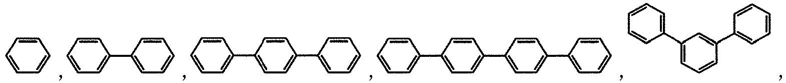 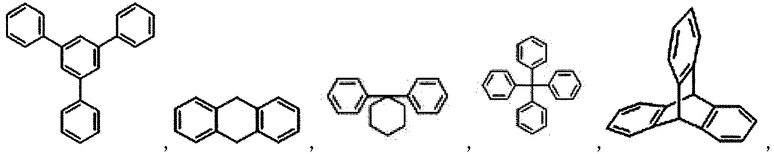 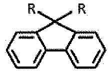 (R=H or CH₃) , 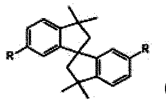 (R=H, OH or a C1-5 alkoxy), 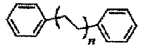 (n is an integer from 1 to 10)

The organic solvent in the step (I) may be one or more halogen-based solvent selected from a group consisting of dichloromethane, chloroform, dichloroethane, dibromomethane, and tetrachloroethane. Specifically, dichloromethane may be used.

And, the strong acid catalyst in the step (II) may be trifluoroacetic acid, trifluoromethanesulfonic acid, pentafluoroethanesulfonic acid, heptafluoro-1-propanesulfonic acid, perfluoropropionic acid, heptafluorobutyric acid, or a mixture thereof.

And, the organic solvent in the step (IV) may be N-methylpyrrolidone, dimethylacetamide, dimethyl sulfoxide or dimethylformamide.

In the step (IV), the polymer is reacted with a halomethane to form a quaternary piperidinium salt. The halomethane may be fluoromethane, chloromethane, bromomethane or iodomethane. Specifically, iodomethane may be used.

In addition, the present disclosure provides an anion-exchange membrane cross-linked from the poly(aryl piperidinium) copolymer ionomer grafted with the propargyl group.

The anion-exchange membrane according to the present disclosure not only has greatly improved mechanical durability, but also increases alkaline stability. In particular, when applied to an alkaline fuel cell or a water electrolysis device, it promotes the interaction between the catalyst layer and the anion-exchange membrane, exhibits low contact resistance, and stabilizes the catalyst layer. Therefore, the cross-linked anion-exchange membrane based on the poly(aryl piperidinium) copolymer ionomer grafted with a propargyl group according to the present disclosure has excellent alkaline fuel cell or water electrolysis performance and durability due to high electrochemical stability.

In addition, the present disclosure provides a method for preparing a cross-linked anion-exchange membrane, which includes: (i) a step of dissolving the poly(aryl piperidinium) copolymer ionomer grafted with the propargyl group in an organic solvent to form a polymer solution; (ii) a step of casting the polymer solution on a glass plate and heating the same to remove the organic solvent, thereby obtaining a dried membrane; (iii) a step of heat-treating the dried membrane to obtain a membrane in which a cross-linking reaction is induced; and (iv) a step of treating the obtained membrane with 1 M NaHCO₃ or 1 M NaOH, washing several times with ultrapure water, and drying the same.

The organic solvent in the step (i) may be N-methylpyrrolidone, dimethylacetamide, dimethyl sulfoxide or dimethylformamide.

In addition, that the concentration of the polymer solution may be specifically 2 to 30 wt%, more specifically 3.0 to 5.0 wt%. If the concentration of the polymer solution is below 2 wt%, film-forming ability may decrease, and if it exceeds 30 wt%, viscosity may become too high, which may result in deterioration of membrane properties after the formation of a membrane.

Additionally, in the step (ii), the organic solvent is removed slowly in an oven at 80 to 90 °C for 24 hours to obtain a dried membrane. Next, in the step (iii), the dried membrane is heat-treated in a dark vacuum atmosphere at 160 to 180 °C for 120 to 240 minutes to prepare an anion-exchange membrane in which cross-linking reaction has been completed after initiation of trimerization reaction and coupling reaction.

The synthesis process of the poly(aryl piperidinium) copolymer ionomer grafted with a propargyl group according to the present disclosure can be represented by Scheme 1.

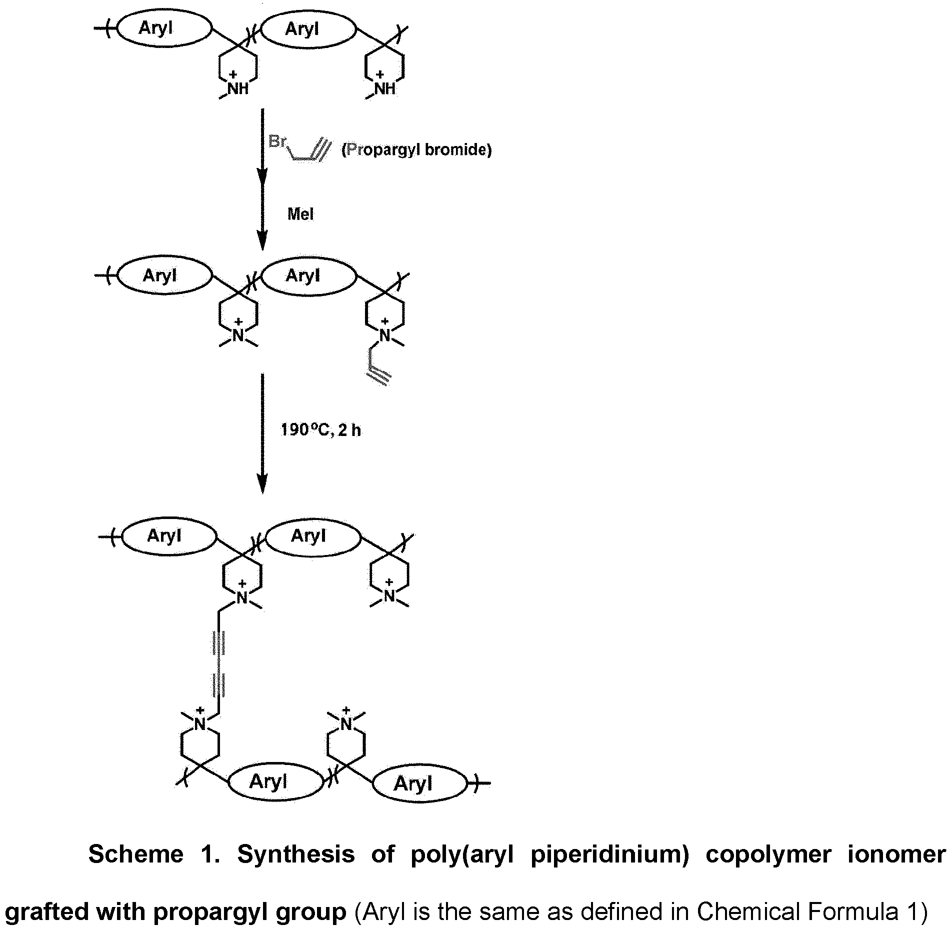

In addition, the present disclosure provides an alkaline fuel cell including the cross-linked anion-exchange membrane.

In addition, the present disclosure provides a water electrolysis device including the cross-linked anion-exchange membrane.

In addition, the present disclosure provides a supercapacitor including the cross-linked anion-exchange membrane.

In addition, the present disclosure provides a carbon dioxide reduction device including the cross-linked anion-exchange membrane.

In addition, the present disclosure provides a redox flow battery including the cross-linked anion-exchange membrane.

Hereinafter, examples and comparative examples according to the present disclosure are described in detail referring to the attached drawings.

### [Examples]

### [Synthetic Examples 1 to 31 Preparation of poly(aryl piperidinium) copolymer ionomer grafted with proparayl group

After placing diphenylethane (1.0252 g, 5.625 mmol), terphenyl (3.885 g, 16.875 mmol), and 1-methyl-4-piperidone (2.8005 g, 24.750 mmol) in a 100-mL reactor as monomers, a solution was formed by dissolving the monomers by adding dichloromethane (DCM, 18 mL) and stirring the mixture. After the solution was cooled to 1 °C, a mixture of trifluoroacetic acid (TFA, 2.7 mL) and trifluoromethanesulfonic acid (TFSA, 18 mL) was slowly added to the solution, which was stirred and reacted for 12 hours to obtain a viscous solution. The viscous solution was poured into 500 mL of distilled water, precipitated, washed several times with deionized water, and dried in an oven at 70 °C for 24 hours to prepare a solid poly(diphenyl-co-terphenyl N-methyl piperidine) polymer (PDTM) (yield 95.3%).

Next, the prepared PDTM (7.247 g) was dissolved in dimethyl sulfoxide (100 mL) to obtain a transparent polymer solution. Then, potassium carbonate (5.4 g) and propargyl bromide (0.5579 g) were added to the polymer solution and the mixture was stirred continuously at room temperature for 24 hours. Afterwards, iodomethane (CH₃I, 4.6 g) was added to the polymer solution and a quaternary piperidinium salt was formed by conducting reaction in a dark room at room temperature for 24 hours. Next, the mixed solution was precipitated in 500 mL of ethyl acetate, filtered, washed several times with deionized water, and dried in a vacuum oven at 45 °C for 24 hours to prepare a solid poly(aryl piperidinium) copolymer ionomer grafted with a propargyl group, which was named PDTP-Pr-10 (grafting ratio 10%, Synthesis Example 1).

In addition, poly(aryl piperidinium) copolymer ionomers grafted with propargyl groups were prepared in the same manner as in Synthesis Example 1, except that the grafting ratio was controlled to 30% and 50% by adjusting the content of propargyl bromide to 30% and 50% during the reaction. They were named PDTP-Pr-30 (Synthesis Example 2) and PDTP-Pr-50 (Synthesis Example 3), respectively.

### [Synthetic Examples 4 to 61 Preparation of poly(aryl piperidinium) copolymer ionomer grafted with proparayl group

Poly(aryl piperidinium) copolymer ionomers grafted with propargyl groups were prepared in the same manner as in Synthetic Examples 1 to 3, except that triptycene, biphenyl and 9,9'-dimethylfluorene were used instead of diphenylethane and terphenyl as monomers. They were named Trip-PFBP-Pr-10 (grafting ratio 10%, Synthetic Example 4), Trip-PFBP-Pr-30 (grafting ratio 30%, Synthetic Example 5), and Trip-PFBP-Pr-50 (grafting ratio 50%, Synthetic Example 6), respectively.

### [Preparation Examples 1 to 61 Preparation of cross-linked anion-exchange membrane from poly(aryl piperidinium) copolymer ionomer grafted with proparayl group

Each of the propargyl group-grafted poly(aryl piperidinium) copolymer ionomers obtained in Synthetic Examples 1 to 6 was dissolved in dimethyl sulfoxide to form a 5 wt% polymer solution. Next, the polymer solution was filtered through a PTFE filter (pore size 1 µm), cast on a glass plate, dried in a vacuum oven at 80 °C for 24 hours, and then peeled off from the glass plate to obtain a transparent membrane. The dried membrane was heat-treated at 170 °C for 120 to 240 minutes in a dark vacuum atmosphere to obtain a membrane in which a cross-linking reaction was induced. The prepared membranes were named x-PDTP-Pr-10 (Preparation Example 1), x-PDTP-Pr-30 (Preparation Example 2), x-PDTP-Pr-50 (Preparation Example 3), x-Trip-PFBP-Pr-10 (Preparation Example 4), x-Trip-PFBP-Pr-30 (Preparation Example 5), and x-Trip-PFBP-Pr-50 (Preparation Example 6), respectively.

The obtained membrane in I⁻ form was immersed in a 1 M NaOH aqueous solution at 60 °C for 24 hours to convert the counter ions to OH⁻, washed several times with ultrapure water, and then dried to prepare a cross-linked anion-exchange membrane.

### [Preparation Example 71 Preparation of membrane electrode assembly (MEA) having cross-linked structure

A catalyst containing Trip-PFBP-Pr-m as a poly(aryl piperidinium) copolymer ionomer grafted with a propargyl group was sprayed onto a PDTP-Pr-x anion-exchange membrane (m and x are grafting ratio and the degree of crosslinking, 10%, 30%, or 50%) to form a catalyst-coated membrane (CCM). A membrane electrode assembly was heat-treated at 170 °C for 120 to 240 minutes in a dark vacuum atmosphere to initiate trimerization and coupling reactions, followed by crosslinking reaction. The obtained membrane electrode assembly in I⁻ form was immersed in a 1 M KOH aqueous solution at 60 °C for 24 hours to convert the counter ions to OH⁻, and then washed several times with ultrapure water and dried to prepare a membrane electrode assembly (MEA) having a cross-linked structure.

### [Comparative Example 11 Preparation of poly(aryl piperidinium) copolymer ionomer and anion-exchange membrane not containing propargyl group

A poly(diphenyl-co-terphenyl dimethyl piperidinium) copolymer ionomer was synthesized in the same manner as in Synthesis Example 1, except that propargyl bromide was not used as a reactant, and an anion-exchange membrane was prepared therefrom in the same manner as in Preparation Example 1, which was named PDTP.

### [Comparative Example 2] Preparation of poly(aryl piperidinium) copolymer ionomer not containing proparayl group

A triptycene poly(fluorene-co-biphenyl dimethyl piperidinium) copolymer ionomer was synthesized in the same manner as in Synthesis Example 4, except that propargyl bromide was not used as a reactant, and an anion-exchange membrane was prepared therefrom in the same manner as in Preparation Example 4, which was named Trip-PFBP.

### [Test Example]

Test data such as mechanical properties, moisture content, expansion rate, fuel cell performance, etc. of the anion-exchange membranes prepared in the preparation examples and comparative examples of the present disclosure were measured and evaluated by the method described in Korean Patent Publication No. 10-2021-0071810 filed by the inventors of the present disclosure.

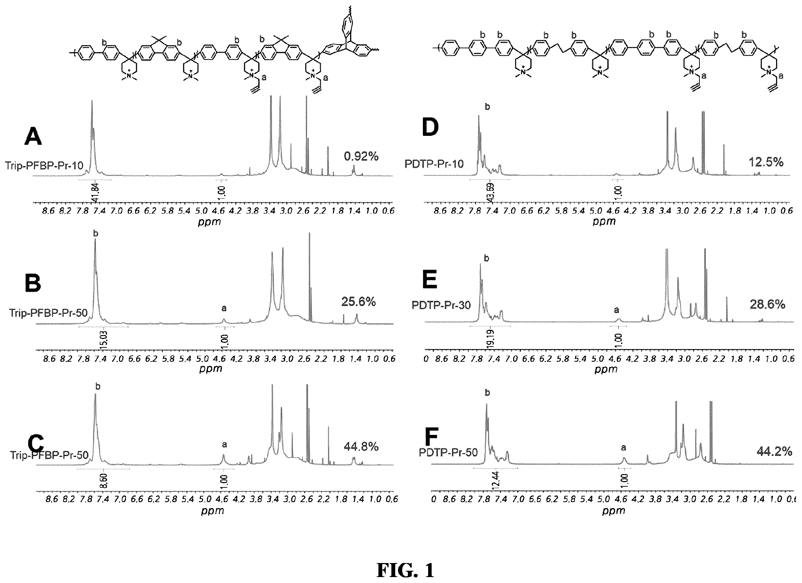

First, FIG. 1 shows the ¹H NMR spectra of the poly(aryl piperidinium) copolymer ionomers Trip-PFBP-Pr-m series and PDTP-Pr-m series (m is 10, 30 or 50) grafted with propargyl groups, obtained in Synthetic Examples 1 to 6 of the present disclosure.

As shown in FIG. 1, the characteristic peak of methylene hydrogen derived from the propargyl group appeared around 4.5 ppm, which means that the grafting reaction was performed successfully, and the grafting ratio was calculated as the integral ratio of methylene hydrogen atoms around 4.5 ppm and aromatic hydrogen atoms around 7.0 to 7.8 ppm.

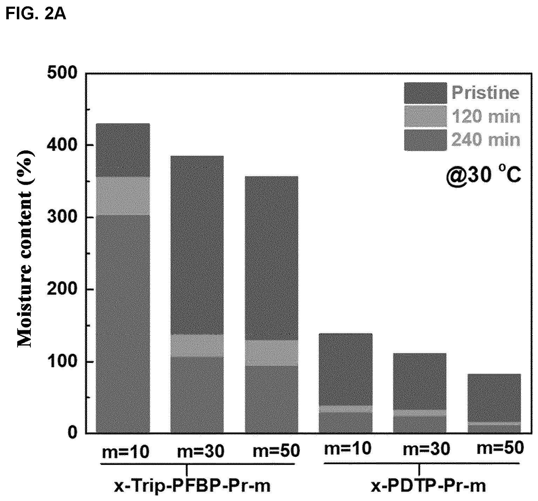

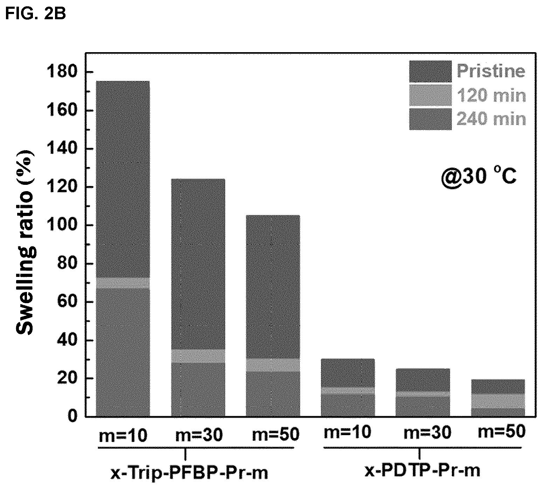

In addition, FIG. 2 shows (A) the moisture content and (B) the swelling ratio of the cross-linked anion-exchange membranes x-Trip-PFBP-Pr-m series and x-PDTP-Pr-m series (m is 10, 30 or 50) after heat treatment at 170 °C for 0 minutes, 120 minutes, and 240 minutes, respectively, from Preparation Examples 1 to 6 of the present disclosure. It can be seen that the moisture content and the expansion ratio rapidly decrease depending on the composition of the cross-linked structure and the cross-linking time.

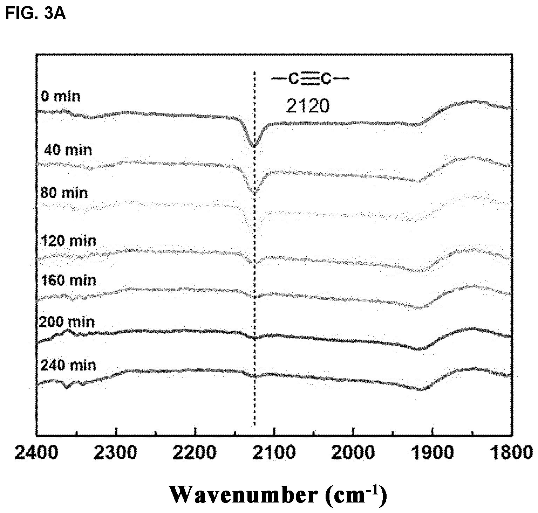

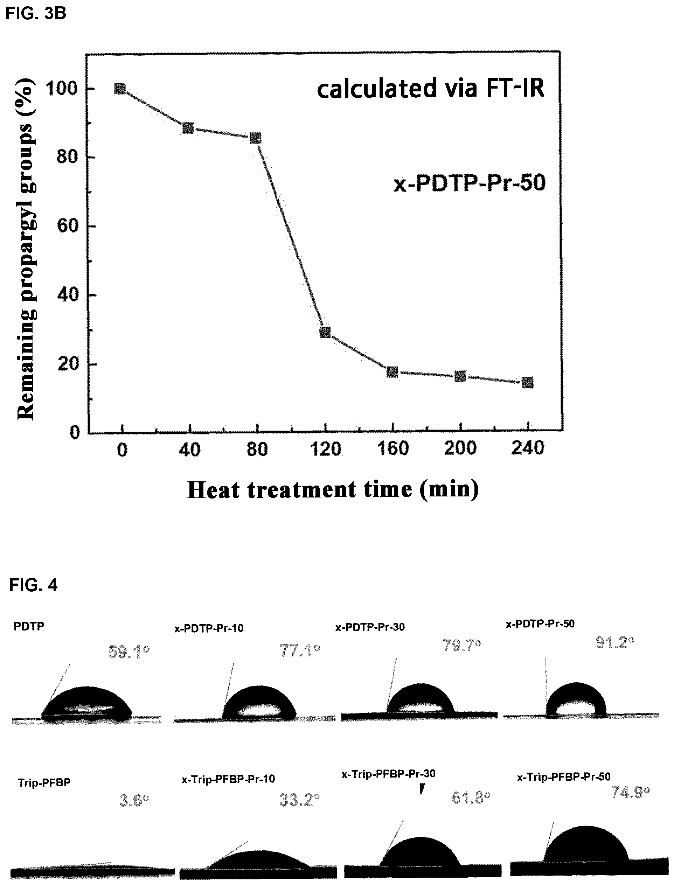

In addition, FT-IR analysis was performed to confirm whether crosslinking reaction proceeded in the cross-linked anion-exchange membrane series obtained in Preparation Examples 1 to 6 of the present disclosure. FIG. 3 shows a result of analyzing the degree of crosslinking of the anion-exchange membrane x-PDTP-Pr-50 prepared in Preparation Example 3 of the present disclosure depending on heat treatment time [A: FT-IR spectra of the x-PDTP-Pr-50 anion-exchange membrane depending on heat treatment time, B: propargyl groups remaining in the x-PDTP-Pr-50 anion-exchange membrane depending on heat treatment time (calculated by integrating the peaks of propargyl groups in the FT-IR spectra)].

As shown in FIG. 3 A, the absorption peak around 2120 cm⁻¹ is due to the stretching vibration of alkyne, and the intensity of the absorption peak decreases as the heat treatment time increases, which means that the propargyl group is consumed during the heat treatment process.

In addition, as shown in FIG. 3 B, most of the propargyl groups remained unreacted when the heat treatment time was shorter than 80 minutes, whereas about 70% of the propargyl groups reacted when the heat treatment time was longer than 120 minutes, suggesting that the crosslinking reaction proceeded successfully. Therefore, the critical heat treatment time is 120 minutes or longer. In the present disclosure, it is preferable to perform the heat treatment within 120 to 240 minutes.

In addition, FIG. 4 shows the contact angles of the cross-linked anion-exchange membranes x-Trip-PFBP-Pr-m series and x-PDTP-Pr-m series (m is 10, 30, 50), prepared in Preparation Examples 1 to 6 of the present disclosure, and PDTP and Trip-PFBP prepared in Comparative Examples 1 and 2, measured after heat treatment at 170 °C for 120 minutes. It can be seen that the water contact angle increases as the degree of crosslinking increases, suggesting that hydrophobicity increases.

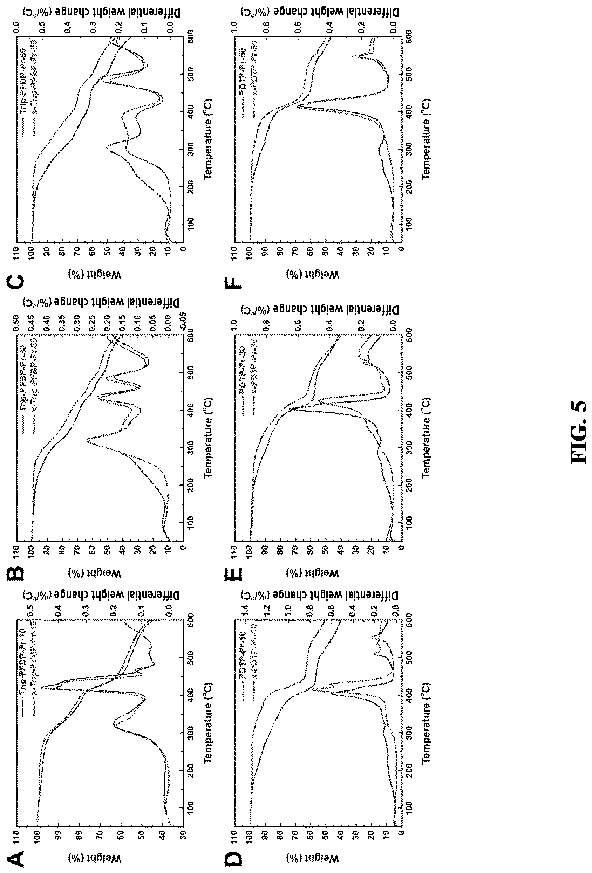

In addition, FIG. 5 shows a thermogravimetric analysis (TGA) result for the Trip-PFBP-Pr-m series and PDTP-Pr-m series prepared in Synthetic Examples 1 to 6 of the present disclosure (before heat treatment), and the cross-linked anion-exchange membranes x-Trip-PFBP-Pr-m series and x-PDTP-Pr-m series prepared in Preparation Examples 1 to 6 after heat treatment at 170 °C for 120 minutes (m is 10, 30 or 50) [A: Trip-PFBP-Pr-10 and x-Trip-PFBP-Pr-10, B: Trip-PFBP-Pr-30 and x-Trip-PFBP-Pr-30, C: Trip-PFBP-Pr-50 and x-Trip-PFBP-Pr-50, D: PDTP-Pr-10 and x-PDTP-Pr-10, E: PDTP-Pr-30 and x-PDTP-Pr-30, F: PDTP-Pr-50 and x-PDTP-Pr-50]. It can be confirmed that the cross-linked anion-exchange membranes obtained after the heat treatment have superior thermal stability compared to the copolymer ionomers before the heat treatment.

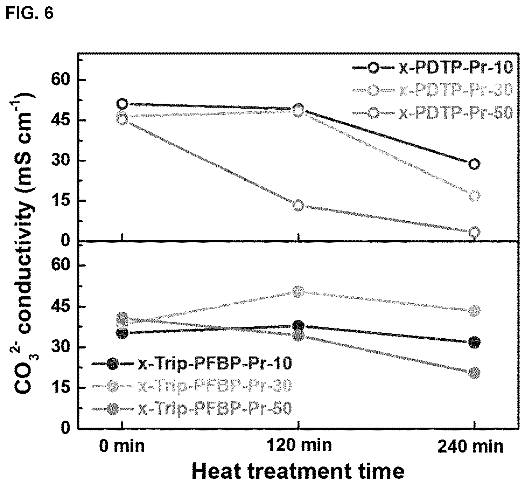

In addition, FIG. 6 shows the CO₃²⁻ conductivity (at 30 °C) of the cross-linked anion-exchange membranes x-Trip-PFBP-Pr-m series and x-PDTP-Pr-m series (m is 10, 30 or 50), prepared in Preparation Examples 1 to 6 of the present disclosure, after heat treatment at 170 °C for 0 minutes, 120 minutes, and 240 minutes, respectively. As the cross-linking time increased, the conductivity tended to decrease. In particular, when the cross-linking time surpassed 240 minutes, the conductivity decreased rapidly. Therefore, it was confirmed that the cross-linking time of 120 to 240 minutes is preferable in terms of securing good conductivity.

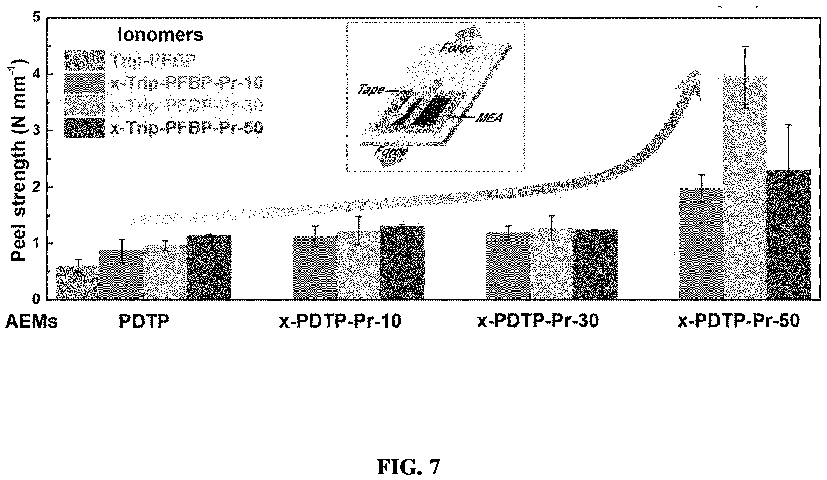

In addition, FIG. 7 shows the peel strength of catalyst-coated membranes depending on the type of copolymer ionomers and anion-exchange membranes.

Control membrane electrode assemblies (MEAs) were prepared using the Trip-PFBP and PDTP obtained in Comparative Examples 1 and 2, and the 180° peel strength of the MEAs was recorded by a universal testing machine (UTM).

As shown in FIG. 7, the x-Trip-PFBP-Pr-x ionomer-based membrane electrode assembly showed a much higher peel strength than the PDTP- and Trip-PFBP (membrane and ionomer)-based membrane electrode assemblies. In particular, the x-Trip-PFBP-Pr-50-based membrane electrode assembly showed a peel strength of 1.15 N mm⁻¹, which was about twice that of the PDTP- and Trip-PFBP-based membrane electrode assemblies. The high peel strength of the membrane electrode assembly suggests a stronger interaction between the catalyst layers. That is, it was confirmed that the presence a cross-linked structure can effectively improve the stability of the catalyst layer of a membrane electrode assembly.

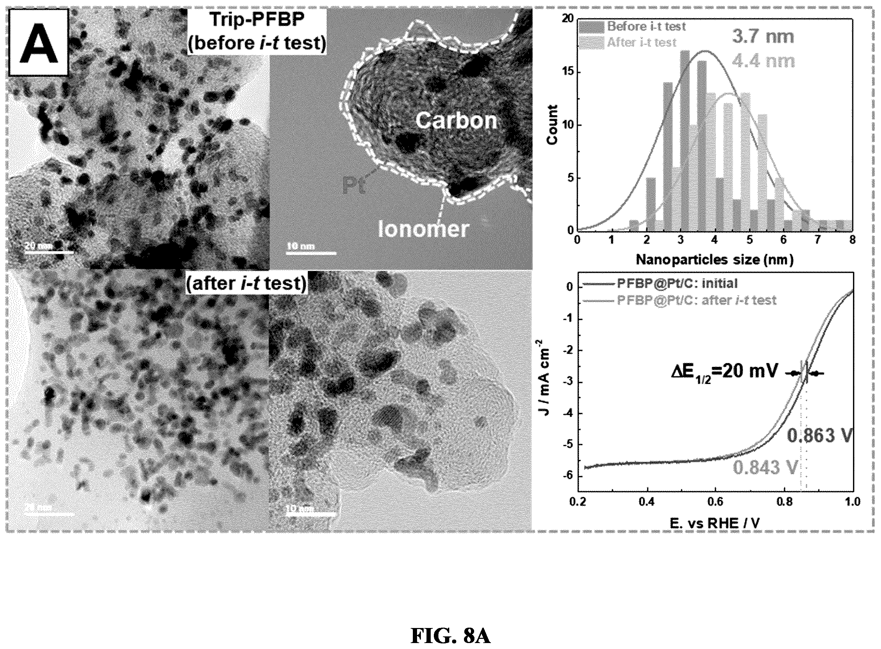

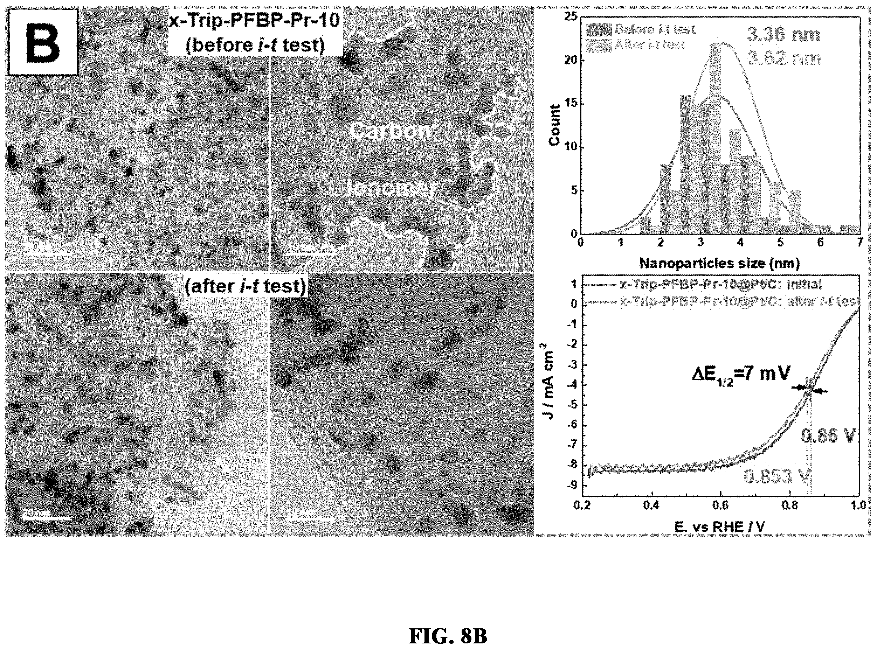

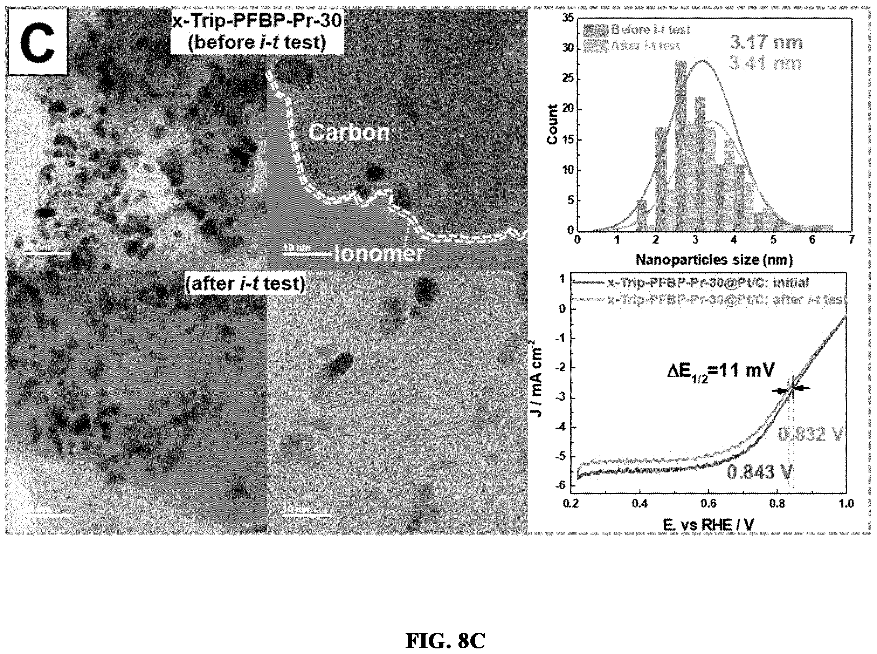

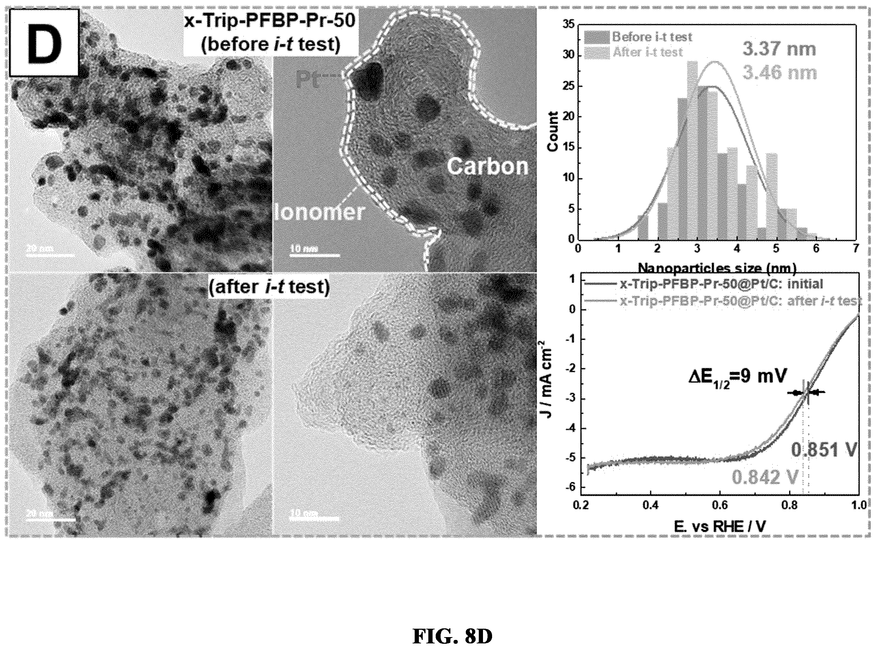

FIGS. 8a to 8d show the electrochemical stability data of catalyst layers analyzed by a rotating disk electrode (RDE) test [transmission electron microscope images, average nanoparticle size, linear scan voltammograms (LSVs) for oxygen reduction reaction (ORR) of catalysts with different ionomers (A: Trip-PFBP, B: x-Trip-PFBP-10, C: x-Trip-PFBP-30, D: x-Trip-PFBP-50)].

After durability test, the half-wave potential of the Trip-PFBP, Pt/C catalyst decreased from 0.683 V to 0.843 V. It was assumed that it was caused by the loss of ionomers and the aggregation of catalyst particles. To verify this, the microscopic morphology of the catalyst was observed using a high-resolution transmission electron microscope. After the i-t test, the Pt particles were aggregated into larger sizes. Specifically, the average particle size of the Trip-PFBP, Pt/C catalyst increased from 3.7 nm to 4.4 nm after the durability test, which suggests low stability. In contrast, the x-Trip-PFBP-Pr-m ionomer-based catalyst exhibited much more stable ORR LSV performance. The degradation of the half-wave potential was less than 11 mV. Meanwhile, the aggregation of Pt particles was also suppressed significantly. Specifically, the average particle sizes of the x-Trip-PFBP-Pr-10, 30, and 50 ionomer catalysts increased from 3.36 to 3.62 nm (B in FIGS. 8a to 8d), from 3.17 to 3.41 nm (C in FIGS. 8a to 8d), and from 3.37 to 3.46 nm, respectively, which were much smaller than that of the PFBP catalyst (from 3.7 to 4.4 nm). This demonstrates that the cross-linking structure can stabilize an energy device by fixing the catalyst particles.

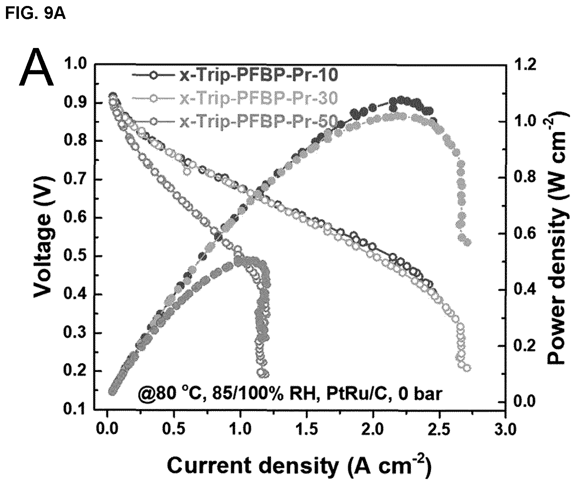

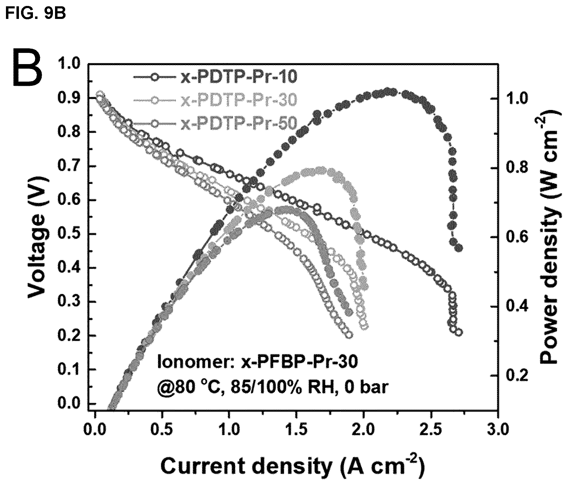

In addition, FIG. 9 shows the fuel cell performance depending on the degree of crosslinking of copolymer ionomers and anion-exchange membranes.

Fuel cells based on x-Trip-PFBP-Pr-10 and x-Trip-PFBP-Pr-30 ionomers achieved a peak power density (PPD) of 1.0 W cm⁻² or higher without back pressure, which is twice that of the x-Trip-PFBP-Pr-50 ionomer-based fuel cell (PPD of 0.502 W cm⁻²). This enhancement in peak power density is attributed to the high ionic conductivity of x-Trip-PFBP-Pr-10 and x-Trip-PFBP-Pr-30. Additionally, the x-PDTP-Pr-10 AEM-based fuel cell exhibited superiority in PPD over x-PDTP-Pr-30 and x-PDTP-Pr-50 due to its higher water uptake (WU) and conductivity.

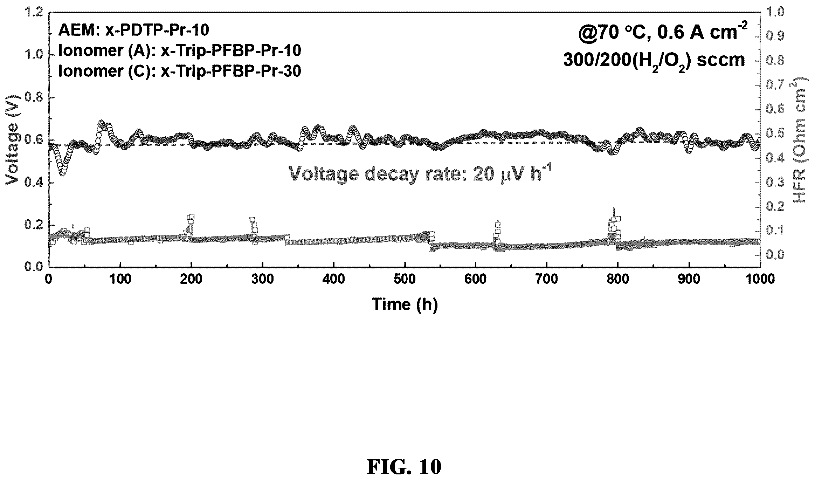

FIG. 10 shows a result of measuring the in-situ durability of a fuel cell based on the anion-exchange membrane x-PDTP-Pr-10 using the asymmetric copolymer ionomer.

A long-term stability test for 1,000 hours showed that the HFR of the fuel cell could be recovered after the replenishment process, suggesting that the ohmic loss was caused by reasons other than chemical degradation of the membrane and ionomer (e.g., carbonation or nonuniform water distribution). These results imply that the improvement of the interaction between the AEM and the catalyst layer is an effective way to extend the life of anion-exchange membrane fuel cells.

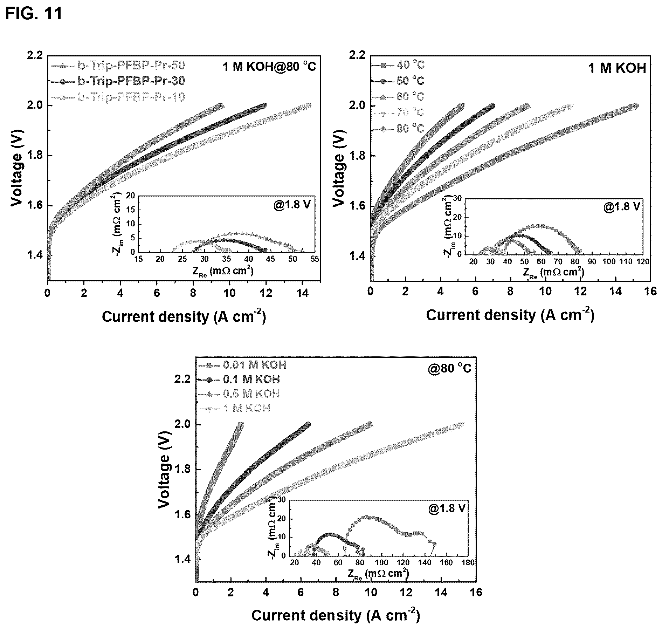

FIG. 11 shows the water electrolysis performance (linear scan voltammograms, LSVs) and resistance (potentiostatic electrochemical impedance spectroscopy, PEIS) depending on the degree of crosslinking, temperature, and alkali composition of copolymer ionomers.

The AEMWE based on x-Trip-PFBP-Pr-10 ionomer achieved the highest current density of 14.34 A cm⁻² @ 2.0 V in a 1 M KOH solution with low Rₒₕₘ of 22.58 MΩ cm⁻² and R_{charge} of 12.28 mΩ cm⁻². The decreased water electrolysis performance (11.9 A cm⁻² @ 2.0 V.) when the x-Trip-PFBP-Pr-30 ionomer was used is thought to be due to the low water uptake capacity of the anode ionomer as a result of using a dry anode. An asymmetric ionomer was applied to the electrolysis performance and durability tests, and x-Trip-PFBP-Pr-10 and x-Trip-PFBP-Pr-30 were used as the positive electrode ionomers. An improved current density of 15.17 A cm⁻² at 80 °C was achieved when the asymmetric ionomer was used. The current density decreased naturally with temperature due to increased Rₒₕₘ and R_{charge}. The AEMWE operated in the concentrated alkaline solution exhibited higher current density due to enhanced conductivity (0.01 M KOH 66 mΩ cm⁻² vs. 1 M KOH 23 mΩ cm⁻² R_{charge}) and electrical activity (0.01 M KOH 79 mΩ cm-2 vs. 1 M KOH 10 mΩ cm⁻² R_{charge}. Nevertheless, the performance of the AEMWE operated in the 0.1 M KOH solution is still much superior.

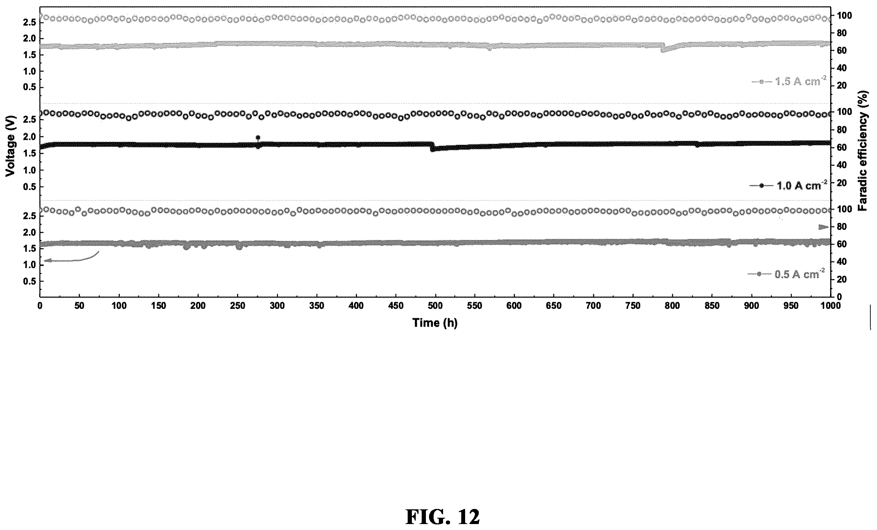

In addition, FIG. 12 shows the in-situ durability test result for the x-PDTP-Pr-10 anion-exchange membrane under the condition of 60 °C, 1 M KOH solution, and different current densities (0.5 A cm⁻², 1.0 A cm⁻², 1.5 A cm⁻²).

As shown in FIG. 12, the AEMWE operated at 0.5 A cm⁻² showed a low initial voltage of 1.63 V and a voltage drop rate of 88 µV h⁻¹ over 1,000 hours. As the current density increased to 1.0 A cm⁻², the initial voltage of the AEMWE increased naturally to 1.70 V while exhibiting a low voltage drop rate of 98 µV h⁻¹, suggesting excellent stability.

1.5 A cm⁻² is a fairly harsh condition for long-term operation of the AEMWE since it generates a large amount of oxygen bubbles in a short period of time, which can cause the catalyst layer to collapse. However, the AEMWE using the catalyst layer obtained in Preparation Example 7 of the present disclosure was able to operate at 1.5 A cm⁻² for 1,000 hours. More importantly, the AEMWE operated under these harsh conditions also showed excellent Faradic efficiency of 95% or higher during the test, demonstrating the high gas robustness of the membrane electrode assembly. These results suggest that the stabilization of the catalyst layer through thermal cross-linking is a promising method to promote the performance and stability of AEMWEs.

## Claims

1. A poly(aryl piperidinium) copolymer ionomer grafted with a propargyl group having a repeating unit represented by <Chemical Formula 1>: 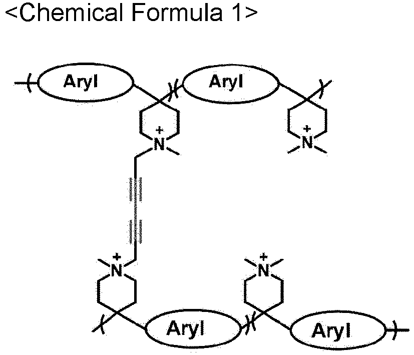 wherein Aryl is two or more different compounds selected from the compounds represented by the following structural formulas: 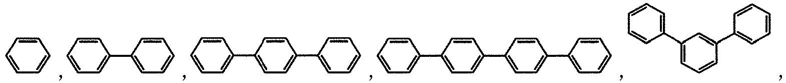 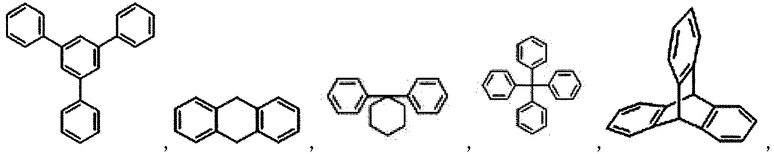 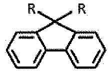 (R=H or CH₃) , 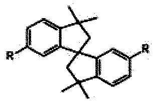 (R=H, OH or a C1-5 alkoxy), 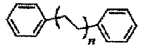 (n is an integer from 1 to 10)

2. A method for preparing a poly(aryl piperidinium) copolymer ionomer grafted with a propargyl group, comprising:
(I) a step dissolving (a) two or more different compounds represented by the following structural formulas as monomers, and (b) 1-methyl-4-piperidone in an organic solvent to form a solution; 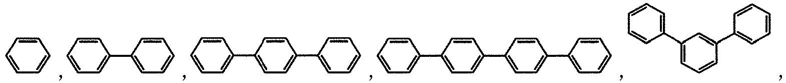 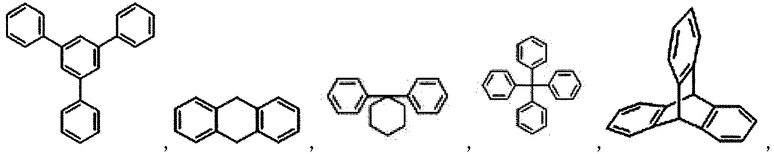 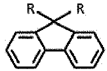 (R=H or CH₃) , 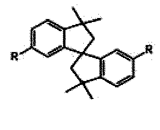 (R=H, OH or a C1-5 alkoxy), 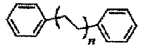 (n is an integer from 1 to 10)
(II) a step of slowly adding a strong acid catalyst to the solution, and stirring and reacting the mixture to obtain a viscous solution;
(III) a step of precipitating, washing and drying the viscous solution to obtain a solid polymer;
(IV) a step of adding potassium carbonate, propargyl bromide, and an excess amount of halomethane to a polymer solution in which the solid polymer is dissolved in an organic solvent and conducting reaction to form a quaternary piperidinium salt grafted with a propargyl group; and
(V) a step of precipitating, washing and drying the mixed solution.

3. The method for preparing a poly(aryl piperidinium) copolymer ionomer grafted with a propargyl group according to claim 2, wherein the organic solvent in the step (I) is one or more halogen-based solvent selected from a group consisting of dichloromethane, chloroform, dichloroethane, dibromomethane, and tetrachloroethane.

4. The method for preparing a poly(aryl piperidinium) copolymer ionomer grafted with a propargyl group according to claim 2, wherein, the strong acid catalyst in the step (II) is trifluoroacetic acid, trifluoromethanesulfonic acid, pentafluoroethanesulfonic acid, heptafluoro-1-propanesulfonic acid, perfluoropropionic acid, heptafluorobutyric acid, or a mixture thereof.

5. The method for preparing a poly(aryl piperidinium) copolymer ionomer grafted with a propargyl group according to claim 2, wherein the organic solvent in the step (IV) is N-methylpyrrolidone, dimethylacetamide, dimethyl sulfoxide or dimethylformamide.

6. The method for preparing a poly(aryl piperidinium) copolymer ionomer grafted with a propargyl group according to claim 2, wherein the halomethane in the step (IV) is fluoromethane, chloromethane, bromomethane or iodomethane.

7. An anion-exchange membrane cross-linked from the poly(aryl piperidinium) copolymer ionomer grafted with a propargyl group according to claim 1.

8. A method for preparing an anion-exchange membrane, comprising:
(i) a step of dissolving the poly(aryl piperidinium) copolymer ionomer grafted with the propargyl group according to claim 1 in an organic solvent to form a polymer solution;
(ii) a step of casting the polymer solution on a glass plate and heating the same to remove the organic solvent, thereby obtaining a dried membrane;
(iii) a step of heat-treating the dried membrane to obtain a membrane in which a cross-linking reaction is induced; and
(iv) a step of treating the obtained membrane with 1 M NaHCO₃ or 1 M NaOH, washing several times with ultrapure water, and drying the same.

9. The method for preparing an anion-exchange membrane according to claim 8, wherein the concentration of the polymer solution is 2 to 30 wt%.

10. The method for preparing an anion-exchange membrane according to claim 8, wherein the heat treatment in the step (iii) is performed at 160 to 180 °C for 120 to 240 minutes in a dark vacuum atmosphere so that cross-linking reaction is completed after initiation of trimerization reaction and coupling reaction.

11. An alkaline fuel cell comprising the anion-exchange membrane according to claim 7.

12. A water electrolysis device comprising the anion-exchange membrane according to claim 7.

13. A supercapacitor comprising the anion-exchange membrane according to claim 7.

14. A carbon dioxide reduction device comprising the anion-exchange membrane according to claim 7.

15. An oxidation-reduction flow battery comprising the anion-exchange membrane according to claim 7.
